# EUROPÄISCHE PATENTSCHRIFT

(11) **EP 3 460 539 B1**
(45) Veröffentlichungstag und Bekanntmachung des Hinweises auf die Patenterteilung: **08.06.2022**
(21) Anmeldenummer: 18190355.0
(22) Anmeldetag: 23.08.2018
(51) Int. Cl.: G02B 27/00, G02B 27/01, G02B 5/02, G03B 21/00, G03B 21/20

(54) **HEAD-UP DISPLAY MIT DIFFUSOR FÜR EIN FAHRZEUG**
HEADS-UP DISPLAY WITH DIFFUSER FOR A VEHICLE
AFFICHAGE TÊTE HAUTE À DIFFUSEUR POUR UN VÉHICULE

(30) Priorität: 07.09.2017 DE 102017120598
(43) Veröffentlichungstag der Anmeldung: 27.03.2019
(73) Patentinhaber: Valeo Schalter und Sensoren GmbH, 74321 Bietigheim-Bissingen (DE)
(72) Erfinder: Kuntze, Daniel, 74321 Bietigheim-Bissingen (DE); Simonis, Karl, 74321 Bietigheim-Bissingen (DE)
(74) Vertreter: Pothmann, Karsten

(56) Entgegenhaltungen:
- EP-A1- 3 026 482
- EP-A1- 3 064 995
- DE-A1-102014 217 180
- FR-A1- 2 858 068

## Beschreibung

Fahrzeug gemäß Anspruch 1 und ein entsprechendes Herstellungsverfahren gemäß Anspruch 13.

Es sind verschiedene Anzeigevorrichtungen für Fahrzeuge bekannt, die insbesondere als Head-up Displays (HUD) bekannt sind. Gelegentlich werden derartige Anzeigevorrichtungen auch als Kopf-oben-Anzeigevorrichtungen bezeichnet, wobei die englische Bezeichnung allerdings auch in der deutschen Sprache Einzug gefunden hat.

Eine derartige Anzeigevorrichtung umfasst üblicherweise eine Bilderzeugungseinrichtung, mit der Licht abgestrahlt werden kann. Ferner umfasst die Anzeigevorrichtung eine Optikeinrichtung, welche beispielsweise einen oder mehrere Spiegel umfassen kann. Mit der Optikeinrichtung kann das von der Bilderzeugungseinrichtung abgestrahlte Licht auf ein Anzeigeelement projiziert werden. Das Anzeigeelement weist eine semitransparente Spiegelfläche auf. Diese semitransparente Spiegelfläche kann beispielsweise durch einen Bereich der Windschutzscheibe des Fahrzeugs bereitgestellt werden. Ferner sind Anzeigevorrichtungen bekannt, die einen sogenannten Combinerspiegel beziehungsweise Kombinierspiegel aufweisen, der die semitransparente Spiegelfläche umfasst. Durch eine Überlagerung der auf den Spiegel projizierten Information, welche von diesem reflektiert wird, mit einer durch den Spiegel hindurch scheinenden Information aus einer hinter dem Spiegel gelegenen Umgebung kann somit ein virtuelles Bild beziehungsweise eine virtuelle Anzeige bereitgestellt werden.

Derartige Anzeigevorrichtungen werden üblicherweise in einem Innenraum des Fahrzeugs montiert. Die virtuelle Anzeige wird üblicherweise in einer sogenannten Eyebox für einen Fahrzeugführer erzeugt. Die Eyebox beschreibt einen Bereich in dem Innenraum des Fahrzeugs, in dem sich die Augen des Fahrzeugführers befinden müssen, um das virtuelle Bild beziehungsweise die virtuelle Anzeige der Anzeigevorrichtung sehen zu können. Bei einer Bewegung der Augen aus der Eyebox hinaus, kann der Fahrzeugführer das virtuelle Bild beziehungsweise die virtuelle Anzeige nicht mehr wahrnehmen.

Die Anzeigevorrichtungen besitzen häufig Diffusoren, um Licht unter definierten Winkeln in gewünschte Raumwinkel zu lenken und eine direkte Sichtbarkeit der Lichtquelle durch Lichtmischung zu vermeiden. Es gibt verschiedene Arten von Diffusoren, einfache sandgestrahlte Glasplatten bis hin zu speziell ausgelegten holographischen Diffusoren. Typischerweise werden optische Strukturen auf ein Substrat wie Folie oder Kunststoffplatte aufgebracht. Die Lichtverteilung für diese Diffusoren ist gegeben, wenn nahezu paralleles, gerichtetes, sogenanntes kollimiertes, Licht normal auf den Diffusor trifft. Dann wird das Licht an der optischen Struktur des Diffusors gebrochen und in den ausgelegten Winkelbereich, beispielsweise 20° zirkular, gelenkt. Der Diffusor kann also beispielsweise als ein zweidimensionales Feld mit optischen Strukturen ausgeführt sein. Insbesondere bei HUD Anwendungen ist es eine große Herausforderung, die Eyebox, d.h. den Bereich, in dem ein Fahrer das virtuelle Bild beziehungsweise die virtuelle Anzeige sehen kann, homogen auszuleuchten. Gleichzeitig ist es wünschenswert, dass möglichst viel des von der Anzeigevorrichtung erzeugten Lichts in die Eyebox gelangt, um eine elektrische Leistungsaufnahme der Anzeigevorrichtung zu begrenzen. Bei einer ideal effizienten Beleuchtung würde alles erzeugte Licht homogen auf der Fläche der Eyebox verteilt.

In diesem Zusammenhang ist aus der US 2014/0085570 A1 eine Hintergrundbeleuchtung bekannt, in der eine Verringerung der Helligkeit bei einem Randabschnitt verknüpft mit der Änderung einer Betrachtungsdistanz reduziert wird. Die Hintergrundbeleuchtung umfasst ein optisches Bauteil zum Transformieren von Strahlen, die von Lichtquellen projiziert worden sind, in Strahlen mit einer Schmalwinkel-Lichtverteilung, in der Wellenstrahlen mit einer Intensität von nicht weniger als einem vorbestimmten Wert innerhalb eines vorbestimmten Winkelbereichs örtlich festgelegt sind, der in der Normalrichtung einer Anzeigeoberfläche eines Flüssigkristallanzeige-Panels zentriert ist, und zum Projizieren der transformierten Strahlen in die Richtung des Flüssigkristallanzeige-Panels; und ein Lichtverteilungs-Steuerbauteil zum Empfangen der Strahlen, die von dem optischen Bauteil projiziert werden, und die die Schmalwinkel-Lichtverteilung haben, und zum Projizieren der empfangenen Strahlen in die Richtung des Flüssigkristallanzeige-Panels. Eine Vielzahl von Konkavelementen ist bei dem Lichtverteilungs-Steuerbauteil bereitgestellt zum Transformieren eines Strahls aus der Reihe der Strahlen mit der Schmalwinkel-Lichtverteilung, der in einen Randabschnitt des Flüssigkristallanzeige-Panels eintritt, so dass die Schmalwinkel-Lichtverteilung des eingetretenen Strahls verbreitert wird im Vergleich zu der eines Strahls, der in einen Zentralabschnitt des Flüssigkristallanzeige-Panels eintritt; und Krümmungsradien der Vielzahl von Konkavelementen gebildet sind. Dabei ist ein Krümmungsradius eines Konkavelementes, das bei einem Randabschnitt des Lichtverteilungs-Steuerbauteils gelegen ist, kleiner als ein Krümmungsradius eines Konkavelementes, das bei einem Zentralabschnitt des Lichtverteilungs-Steuerbauteils gelegen ist.

Auch ist aus der US 2016/0062114 A1 eine elektronische Anzeige für verminderte Rückstrahlungen bekannt. Ein optisches System, das Reflektionen von einer elektronischen Anzeige verringert, kann eine elektronische Anzeige und ein Lichtlenkmedium umfassen. Das Lichtlenkmedium ist konfiguriert, eine Vielzahl von Betrachtungskegeln in ein Augenbewegungsfeld, das der Anzeige zugewandt ist, zu lenken, so dass die Betrachtungskegel zumindest teilweise an der

Augenbewegungsfeld-Ebene überlappen, wobei ein Betrachtungskegel eine geometrische Position ist, innerhalb der ein Betrachters nur Licht, welches von der elektronischen Anzeige kommt, sehen kann.

Ferner ist aus der DE 10 2014 217180 A1 eine Bilderzeugungsvorrichtung für ein Head-up-Display bekannt, bei der ein erzeugter Lichtstrahl mittels eines Flächenlichtmodulators direkt auf einen Spiegel des Head-up-Displays gelenkt wird, ohne den Lichtstrahl mittels einer zwischen dem Flächenlichtmodulator und dem Spiegel angeordneten Streufläche zusätzlich zu formen.

Aus der EP 3 064 995 A1 ist ein Head-up-Display mit einen lichtdurchlässigen Bildschirm bekannt, welche aus zwei ebenen, übereinander angeordneten Diffusorplatten bestehen.

Ein Head-up-Display in Form einer Abtastvorrichtung mit einen Diffusor ist aus der EP 3 026 482 A1 bekannt.

Zudem ist aus der FR 2 858 068 A1 ein Head-up-Display mit einer Diffusorplatte in einem Helmvisier im Bereich der Luftfahrt bekannt.

Ausgehend von dem oben genannten Stand der Technik liegt der Erfindung somit die Aufgabe zugrunde, eine Anzeigevorrichtung als Head-up Display für ein Fahrzeug und ein Verfahren zur Herstellung einer solchen Anzeigevorrichtung anzugeben, die eine zuverlässige und gut erkennbare Darstellung von einem virtuellen Bild beziehungsweise einer virtuellen Anzeige ermöglichen.

Die Lösung der Aufgabe erfolgt erfindungsgemäß durch die Merkmale der unabhängigen Ansprüche 1 und 13. Vorteilhafte Ausgestaltungen der Erfindung sind in den Unteransprüchen angegeben.

Gemäß Anspruch 1 ist somit eine Anzeigevorrichtung als Head-up Display für ein Fahrzeug fangegeben.

Weiter ist gemäß Anspruch 13 ein Verfahren zur Herstellung einer Anzeigevorrichtung als Head-up Display für ein Fahrzeug angegeben.

Grundidee der vorliegenden Erfindung ist es also, durch die Wölbung der Austrittsfläche das von dem Diffusor abgestrahlte Licht in der Eyebox zu bündeln und ihre Ausleuchtung zu verbessern. Durch eine Wahl von einem Kurvenradius der Wölbung, der klein im Vergleich zu Größe des Diffusors ist, wird ein benötigter Austrittswinkel für das Licht nicht überschritten. Das von der Bilderzeugungseinrichtung abgestrahlte Licht wird dabei als im Wesentlichen kollimar angesehen. Die Wölbung kann einfach bereitgestellt werden.

Das Anzeigeelement kann beispielsweise durch einen Bereich einer Windschutzscheibe des Fahrzeugs bereitgestellt werden. Das Anzeigeelement umfasst vorzugsweise eine semitransparente Spiegelfläche. Durch eine Überlagerung von auf den Spiegel projizierten Informationen, welche von diesem reflektiert werden, zusammen mit einer durch den Spiegel hindurch scheinenden Information aus einer hinter dem Spiegel gelegenen Umgebung, kann somit ein virtuelles Bild beziehungsweise eine virtuelle Anzeige bereitgestellt werden. Die semitransparente Spiegelfläche kann durch eine Anordnung des Anzeigeelements mit entsprechenden Winkeln zu dem von der Bilderzeugungseinrichtung abgestrahlten Licht und von Licht der durch den Spiegel hindurch scheinenden Information erzielt werden.

Die Darstellung eines virtuellen Bildes beziehungsweise einer virtuellen Anzeige betrifft eine Projektion von Informationen für einen Fahrzeugführer. Die Informationen können das Fahrzeug selber betreffen, beispielsweise eine aktuelle Geschwindigkeit, Fahrzeugstatusinformationen, beispielsweise einen Füllstand eines Kraftstoffbehälters oder eine Information über eine geöffnete Tür, Streckeninformationen, beispielsweise Routeninformationen, Hindernisse, aktuelle Verbote oder Gebote zum Führen des Fahrzeugs, oder auch - im Stand - Multimediainformationen zur Unterhaltung oder Information des Fahrzeugführers. Die Informationen werden von der Bilderzeugungseinrichtung mit dem Licht abgestrahlt.

Dabei wird das von der Displayeinheit dargestellte Bild bzw. die von der Displayeinheit dargestellte Anzeige als virtuelles Bild beziehungsweise virtuelle Anzeige in der Eyebox dargestellt. Die Displayeinheit liefert also die Bildinformationen, mit denen das Licht von der Bilderzeugungseinheit abgestrahlt wird.

Die Optikeinrichtung kann eine beliebige optische Einrichtung sein, um das von der Bilderzeugungseinrichtung abgestrahlte Licht auf das Anzeigeelement zu projizieren, beispielsweise mit Spiegeln und/oder Linsen. Auch kann die Optikeinrichtung weitere optische Elemente enthalten, beispielsweise Filter.

Der Diffusor kann aus einem prinzipiell beliebigen transmissiven Material gefertigt sein, beispielsweise aus Glas oder vorzugsweise aus einem lichtdurchlässigen Kunststoffmaterial.

Die Eintrittsfläche kann eine prinzipiell beliebige Form aufweisen. Die Eintrittsfläche kann beispielsweise eine gerade Fläche sein, oder selber eine Wölbung aufweisen. Das Licht tritt über die Eintrittsfläche in den Diffusor ein, so dass die Eintrittsfläche ausgeführt und angeordnet sein muss, dass das von der Bilderzeugungseinrichtung abgestrahlte Licht in einem geeigneten Winkel darauf trifft, so dass das Licht nicht ganz oder überwiegend reflektiert wird. Die Eintrittsfläche kann als insgesamt ebene Fläche ausgebildet. Unbenommen davon kann die Eintrittsfläche lokale Strukturen aufweisen.

Die Austrittsfläche weist insgesamt eine Wölbung, was bedeutet, dass eine im Wesentlichen einheitliche Wölbung über die Austrittsfläche ausgebildet ist. Unbenommen davon kann die Austrittsfläche lokale Strukturen aufweisen, die die Wölbung verändern.

In vorteilhafter Ausgestaltung der Erfindung ist der Diffusor in der Bilderzeugungseinrichtung angeordnet. Die Anordnung des Diffusors in der Bilderzeugungseinrichtung ermöglicht eine einfache Bereitstellung und Verwendung des Diffusors. Vorzugsweise ist die Bilderzeugungseinrichtung mit dem Diffusor entsprechend vorkonfiguriert, dass die Bilderzeugungseinrichtung mit dem enthaltenen Diffusor durch eine Anbringung an dem Fahrzeug automatisch verwendet werden kann.

In vorteilhafter Ausgestaltung der Erfindung ist der Diffusor zwischen der Lichtquelle und der Displayeinheit angeordnet. Das von der Lichtquelle abgestrahlte Licht kann also bereits vor einem Erreichen der Displayeinheit entsprechend beeinflusst werden, um in der Eyebox gebündelt zu erscheinen.

In vorteilhafter Ausgestaltung der Erfindung ist der Diffusor in einem Strahlengang des von der Lichtquelle abgestrahlten Lichts hinter der Displayeinheit angeordnet ist. Dies ermöglicht eine Kompakte Anordnung von Lichtquelle und Displayeinheit.

In vorteilhafter Ausgestaltung der Erfindung ist der Diffusor in einem Strahlengang des von der Lichtquelle abgestrahlten Lichts hinter der Bilderzeugungseinrichtung angeordnet ist. Der Diffusor ist also beispielsweise Teil der Optikeinrichtung sein. Die Anordnung des Diffusors hinter der Bilderzeugungseinrichtung ermöglicht große Freiheiten in Bezug auf die Positionierung des Diffusors und damit auch auf eine Gestaltung des Diffusors.

In vorteilhafter Ausgestaltung der Erfindung ist die Wölbung des Diffusors derart ausgeführt, dass die Austrittsfläche ein Winkelsegment von maximal etwa 30°, vorzugsweise maximal etwa 20°, umfasst. Entsprechende Winkelsegmente sind einerseits als Maximalwert anzusehen, da andernfalls das Licht zumindest in Randbereichen davon nicht mehr wie gewünscht durch die Austrittsfläche austreten kann. Außerdem ergibt sich für übliche Fahrzeuge ein Aufbau, der geeignete Verhältnisse zwischen Diffusor, Anzeigeelement, Abstand zwischen Anzeigeelement und Diffusor, wie auch anderen Größen bewirkt. Bei einem Winkelsegment von 20° ergibt sich beispielsweise ein maximaler Winkel von 10° zu beiden Seiten von einer Mittelposition des Diffusors. Es ergibt sich entsprechend ein maximaler Austrittswinkel von etwa 10°.

In vorteilhafter Ausgestaltung der Erfindung weist der Diffusor einen im Wesentlichen konstanten Abstand zwischen der Eintrittsfläche und der Austrittsfläche auf. Der Diffusor weist also eine im Wesentlichen konstante Dicke auf. Der Diffusor kann entsprechend beispielsweise als gewölbte Scheibe ausgeführt sein. Es ergibt sich für die Eintrittsfläche ein Kurvenradius in Übereinstimmung mit der Wölbung der Austrittsfläche. Somit kann erreicht werden, dass ein benötigter Einfallswinkel für von der Bilderzeugungseinrichtung abgestrahltes Licht von beispielsweise +/-10° bezogen auf eine Hauptausbreitungsrichtung des Lichts nicht überschritten wird. Auch die Eintrittsfläche weist somit eine im Wesentlichen einheitliche Wölbung auf. Der Abstand zwischen der Eintrittsfläche und der Austrittsfläche ist nur im Wesentlichen konstant, da neben Bauteilschwankungen an der Eintrittsfläche und/oder der Austrittsfläche optische Strukturen ausgeformt sein können, um das von der Bilderzeugungseinrichtung abgestrahlte Licht in einer gewünschten Weise auf das Anzeigeelement zu projizieren. Diese optischen Strukturen können die Dicke des Diffusors lokal verändern.

Gemäß Anspruch 1 der vorliegenden Erfindung ist der Diffusor an seiner Austrittsfläche mit einer Mehrzahl optischer Strukturen ausgeführt, wobei die optischen Strukturen eine Abstrahlcharakteristik zur Bündelung des abgestrahlten Lichts aufweisen. Die optischen Strukturen können in dem Diffusor an der Seite der Austrittsfläche ausgeformt sein. Alternativ oder zusätzlich können die optischen Strukturen auf den Diffusor an der Seite der Austrittsfläche aufgebracht sein. Die optischen Strukturen beeinflussen ein Austreten des von der von der Bilderzeugungseinrichtung abgestrahlten Lichts aus dem Diffusor. Dadurch kann der Diffusor das von der Bilderzeugungseinrichtung abgestrahlte Licht in einer gewünschten Weise auf das Anzeigeelement projizieren. Durch die optischen Strukturen kann insbesondere eine zusätzliche Richtwirkung des von der Bilderzeugungseinrichtung abgestrahlten Lichts zu der Eyebox erzielt werden. Vorzugsweise weisen die optischen Strukturen eine matrixartige Anordnung auf. Mit den optischen Strukturen kann eine besonders homogene Lichtverteilung in der Eyebox erzielt werden, indem das Licht in auszuleuchtende Bereiche gelenkt werden kann. Entsprechend kann der Diffusor auch an seiner Eintrittsfläche mit einer Mehrzahl optischer Strukturen ausgeführt sein, wobei die optischen Strukturen eine Einstrahlung des von der abgestrahlten Bilderzeugungseinrichtung abgestrahlten Lichts verbessern und/oder lenken.

In vorteilhafter Ausgestaltung der Erfindung weisen die optischen Strukturen eine Abstrahlcharakteristik mit einer Halbwertsbreite von nicht mehr als 45°, vorzugsweise von nicht mehr als 35°, weiter bevorzugt von nicht mehr als 30°, auf. Die Halbwertsbreite einer Funktion mit einem Maximum ist die Differenz zwischen den beiden Argumentwerten, für die die Funktionswerte auf die Hälfte des Maximums abgesunken sind, anschaulich also die "Breite bei halber Höhe". Je geringer die Halbwertsbreite, desto stärker wird das Licht gebündelt, und desto gezielter kann das Licht auf das Anzeigeelement projiziert werden.

In vorteilhafter Ausgestaltung der Erfindung weisen die optischen Strukturen eine Hauptabstrahlrichtung auf, wobei die Hauptabstrahlrichtung senkrecht zu der Austrittsfläche ausgeführt ist. Die Hauptabstrahlrichtung entspricht also zumindest in einem lokalen Bereich bzw. in einer asymptotischen Näherung einer Normalenrichtung auf der Austrittsfläche. Ausgehend von der Wölbung der Austrittsfläche des Diffusors kann somit eine Bündelung des abgestrahlten Lichts erreicht werden. Verluste in Randbereichen des Diffusors bzw. der Eyebox können verringert werden.

In vorteilhafter Ausgestaltung der Erfindung weisen die optischen Strukturen eine Hauptabstrahlrichtung auf, wobei die Hauptabstrahlrichtung der optischen Strukturen in Richtung zu einem Mittelpunkt der Eyebox ausgeführt ist. Dadurch weist jede optische Struktur einen anderen Winkel der Hauptabstrahlrichtung bezogen auf die Normale der Austrittsfläche auf. Durch die Hauptabstrahlrichtung in Richtung zu dem Mittelpunkt der Eyebox können Verluste in Randbereichen des Diffusors bzw. der Eyebox stärker verringert werden. Basierend auf einer Dimensionierung von Diffusor, Anzeigeelement, und dazwischenliegenden Abständen kann eine homogene Ausleuchtung der Eyebox erzielt werden. Wenn beispielsweise die Halbwertsbreite ungefähr einem Winkel entspricht, der mit einem durch das Anzeigeelement definierten Winkelbereich übereinstimmt, kann im Idealfall für jede optische Struktur das gesamte Licht auf das Anzeigeelement projiziert werden. Es ist nicht erforderlich, das alle optischen Strukturen exakt zu dem Mittelpunkt der Eyebox ausgerichtet sind. Es ist aber Ziel, zumindest einen Anteil von Licht, welches auf das Anzeigeelement trifft, zu vergrößern, um die Ausleuchtung der Eyebox zu verbessern.

In vorteilhafter Ausgestaltung der Erfindung ist der Diffusor als im Wesentlichen ebene Platte ausgeführt, und die Wölbung ist in dem Diffusor durch Biegen der ebenen Platte ausgebildet. Somit kann der Diffusor mit der Wölbung auf besonders einfache Weise bereitgestellt werden. Entsprechende planare Diffusoren sind prinzipiell bekannt und leicht verfügbar, wodurch sich auch ein Kostenvorteil ergibt. Der Diffusor ist in diesem Fall aus einem vorzugsweise elastisch verformbaren Material hergestellt, besonders bevorzugt aus einem elastisch verformbaren Kunststoff.

In vorteilhafter Ausgestaltung der Erfindung ist die Anzeigevorrichtung mit dem Anzeigeelement ausgeführt. Das Anzeigeelement ist dabei üblicherweise klappbar, verschwenkbar, linear verschiebbar, oder ähnliches, gehalten, um es bei Nichtbenutzung unsichtbar zu lagern, beispielsweise in einem Armaturenbrett. Das Anzeigeelement weist vorzugsweise eine semitransparente Spiegelfläche auf. Das Anzeigeelement kann beispielsweise als ein sogenannter Combinerspiegel beziehungsweise Kombinierspiegel ausgeführt sein, der die semitransparente Spiegelfläche umfasst.

Nachfolgend wird die Erfindung unter Bezugnahme auf die anliegende Zeichnung anhand bevorzugter Ausführungsformen näher erläutert. Die dargestellten Merkmale können sowohl jeweils einzeln als auch in Kombination einen Aspekt der Erfindung darstellen. Merkmale verschiedener Ausführungsbeispiele sind übertragebar von einem Ausführungsbeispiel auf ein anderes.

Es zeigt
- Fig. 1: eine ausschnittsweise, schematische Darstellung eines Fahrzeugs mit einer Anzeigevorrichtung zur Projektion auf einer Windschutzscheibe des Fahrzeugs gemäß Anspruch 1 der vorliegenden Erfindung in einer teilweise freigeschnittenen Seitenansicht,
- Fig. 2: eine ausschnittsweise, schematische Darstellung eines Fahrzeugs mit einer Anzeigevorrichtung zur Projektion auf einem Combinerspiegel der Anzeigevorrichtung gemäß einer zweiten Ausführungsform der vorliegenden Erfindung in einer teilweise freigeschnittenen Seitenansicht,
- Fig. 3: eine schematische Darstellung eines Diffusors und einer Eyebox mit in der Austrittsfläche des Diffusors ausgebildeten optischen Strukturen gemäß Anspruch 1 der vorliegenden Erfindung in einer Seitenansicht,
- Fig. 4: eine schematische Darstellung eines Diffusors und einer Eyebox mit in der Austrittsfläche des Diffusors ausgebildeten optischen Strukturen gemäß einer vierten Ausführungsform der vorliegenden Erfindung in einer Seitenansicht,
- Fig. 5: eine Detailansicht einer optischen Struktur des Diffusors aus einer der Figuren 3 oder 4 mit einer homogenen Lichtverteilung gemäß einer fünften Ausführungsform,
- Fig. 6: eine Detailansicht einer optischen Struktur des Diffusors aus Figur 4 mit einer gerichteten Lichtverteilung gemäß einer sechsten Ausführungsform,
- Fig. 7: eine schematische Darstellung einer Bilderzeugungseinrichtung zum Bereitstellen eines Bildes zur Projektion auf dem Combinerspiegel der Anzeigevorrichtung in Übereinstimmung mit Anspruch 1 der vorliegenden Erfindung,
- Fig. 8: eine schematische Darstellung einer Bilderzeugungseinrichtung mit einem Diffusor zum Bereitstellen eines Bildes zur Projektion auf dem Combinerspiegel der Anzeigevorrichtung gemäß einer siebten Ausführungsform der vorliegenden Erfindung, und
- Fig. 9: eine schematische Darstellung einer Bilderzeugungseinrichtung mit einem Diffusor zum Bereitstellen eines Bildes zur Projektion auf dem Combinerspiegel der Anzeigevorrichtung gemäß einer achten Ausführungsform der vorliegenden Erfindung.

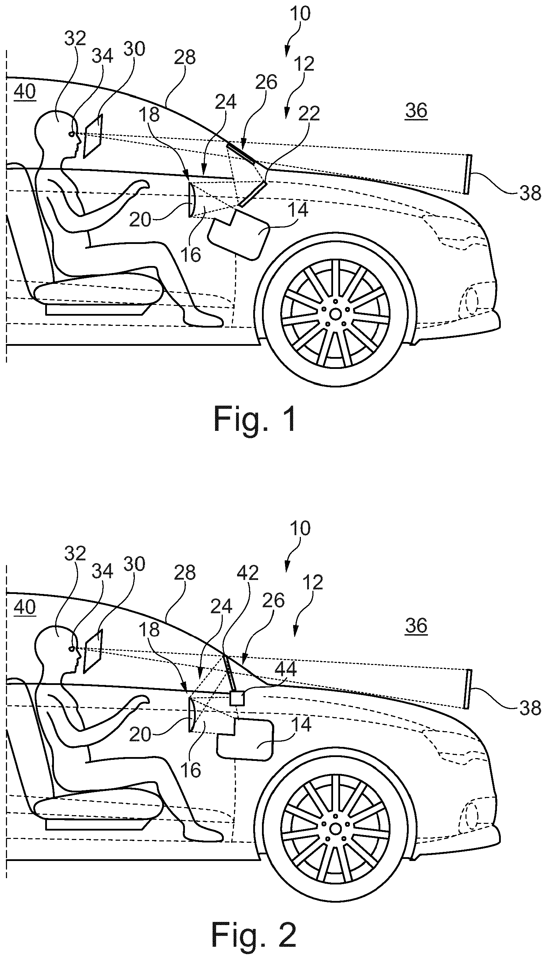

Die Figur 1 zeigt eine ausschnittsweise Darstellung eines Fahrzeugs 10 gemäß Anspruch 1 der vorliegenden Erfindung. Das Fahrzeug 10 ist in dem vorliegenden Ausführungsbeispiel als Personenkraftwagen ausgebildet. Das Fahrzeug 10 umfasst eine Anzeigevorrichtung 12. Die Anzeigevorrichtung 12 ist in dem vorliegenden Ausführungsbeispiel als Head-up Display, das gelegentlich auch als Kopf-oben-Anzeigevorrichtung bezeichnet wird, ausgeführt.

Die Anzeigevorrichtung 12 umfasst eine Bilderzeugungseinrichtung 14. Von der Bilderzeugungseinrichtung 14 kann Licht 16 abgestrahlt werden. Insbesondere kann mit der Bilderzeugungseinrichtung 14 eine Anzeige beziehungsweise ein Bild bereitgestellt werden.

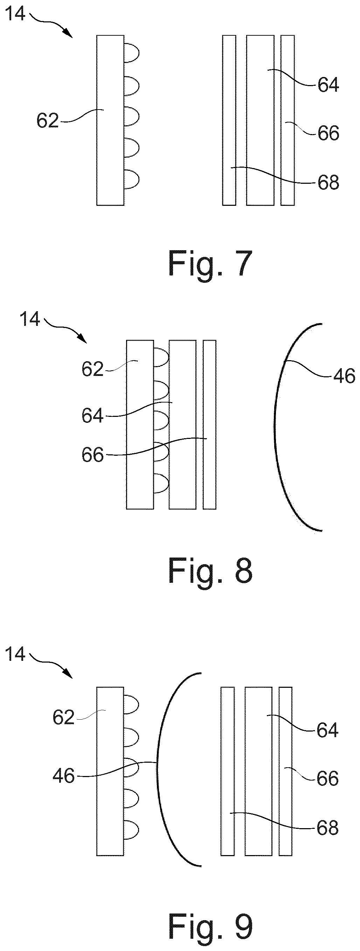

Die Bilderzeugungseinrichtung 14 gemäß Anspruch 1 der vorliegenden Erfindung ist im Detail in Fig. 7 dargestellt ist. Die Bilderzeugungseinrichtung 14 umfasst eine Lichtquelle 62 und eine Displayeinheit 64. Entsprechend ist die Lichtquelle 62 vorliegend als Hintergrundbeleuchtung für die Displayeinheit 64 ausgeführt. Zusätzlich umfasst die Bilderzeugungseinrichtung 14 einen ersten und zweiten Filter 66, 68, die an beiden Seiten der Displayeinheit 64 positioniert sind. Die Filter 66, 68 sind optional und können in einer alternativen Ausführungsform weggelassen werden.

Die Displayeinheit 64 ist hier als TFT-Display ausgeführt und kann somit die Anzeige beziehungsweise das Bild bereitstellen. Durch das Beleuchten der Displayeinheit 64 mit der Lichtquelle 62 wird eine auf der Displayeinheit 64 bereitgestellte Anzeige beziehungsweise ein Bild von der Bilderzeugungseinrichtung 14 bereitgestellt beziehungsweise mit dem das Licht 16 abgestrahlt werden kann. Prinzipiell ist es auch bekannt, den Bildschirm frontal zu beleuchten, und die Anzeige beziehungsweise das Bild über entsprechende Reflektionen von frontal eintreffendem Licht zu erzeugen, oder eine selbstleuchtende Displayeinheit 64 breitzustellen.

Darüber hinaus umfasst die Anzeigevorrichtung 12 eine Optikeinrichtung 18. Die Optikeinrichtung 18 umfasst in dem vorliegenden Ausführungsbeispiel einen ersten Spiegel 20 und einen zweiten Spiegel 22. Das von der Bilderzeugungseinrichtung 14 abgestrahlte Licht 16 trifft zunächst auf den ersten Spiegel 20, und wird von dort auf den zweiten Spiegel 22 reflektiert. Die Optikeinrichtung 18 kann in einer alternativen Ausführungsform weitere optische Elemente wie Spiegel, Linsen und/oder Filter umfassen. Die Bilderzeugungseinrichtung 14 und die Optikeinrichtung 18 sind vorliegend innerhalb eines hier nur angedeuteten Armaturenbretts 24 des Fahrzeugs 10 angeordnet.

Das Licht 16, das von der Bilderzeugungseinrichtung 14 abgestrahlt wird, wird von dem zweiten Spiegel 22 der Optikeinrichtung 18 auf ein Anzeigeelement 26 projiziert. Das Anzeigeelement 26 ist vorliegend durch einen Teil einer Windschutzscheibe 28 des Fahrzeugs 10 gebildet. Das Anzeigeelement 26 umfasst eine semitransparente Spiegelfläche. Das Licht 16, das auf das Anzeigeelement 26 projiziert wird, wird im Bereich einer Eyebox 30 zu einem Fahrzeugführer 32 des Fahrzeugs 10 reflektiert, wobei die Eyebox 30 so positioniert ist, dass das Licht 16 auf Augen 34 des Fahrzeugführers 32 trifft. Somit überlagert sich das Licht 16, das von der Bilderzeugungseinrichtung 14 auf das Anzeigeelement 26 projiziert wird, mit Licht, das von einem Umgebungsbereich 36 des Fahrzeugs 10 zu den Augen 34 des Fahrzeugführers 32 gelangt. Für den Fahrzeugführer 32 des Fahrzeugs 10 ergibt sich somit eine virtuelle Anzeige 38 beziehungsweise ein virtuelles Bild 38. Die Eyebox 30 beschreibt dabei einen Bereich in einem Innenraum 40 des Fahrzeugs 10, in dem sich die Augen 34 des Fahrzeugführers 32 befinden müssen, um das virtuelle Bild 38 beziehungsweise die virtuelle Anzeige 38 auf dem Anzeigeelement 26 sehen zu können.

Die Darstellung eines virtuellen Bildes 38 beziehungsweise einer virtuellen Anzeige 38 betrifft eine Projektion von Informationen für den Fahrzeugführer 32. Die Informationen können das Fahrzeug 10 selber betreffen, beispielsweise eine aktuelle Geschwindigkeit, Fahrzeugstatusinformationen, beispielsweise einen Füllstand eines Kraftstoffbehälters oder eine Information über eine geöffnete Tür, und/oder Streckeninformationen, beispielsweise Routeninformationen, Hindernisse, aktuelle Verbote oder Gebote zum Führen des Fahrzeugs 10. Im Stand können auch Multimediainformationen zur Unterhaltung oder Information des Fahrzeugführers 10 projiziert werden. Die Informationen werden von der Bilderzeugungseinrichtung 14 mit dem Licht 16 abgestrahlt.

Die Figur 2 zeigt eine ausschnittsweise Darstellung eines Fahrzeugs 10 mit einer Anzeigevorrichtung 12 gemäß einer zweiten Ausführungsform der vorliegenden Erfindung. Das Fahrzeug 10 und die Anzeigevorrichtung 12 der zweiten Ausführungsform stimmen weitgehend mit dem Fahrzeug 10 und der Anzeigevorrichtung 12 der ersten Ausführungsform überein, so dass hier nur Unterschiede zwischen dem Fahrzeug 10 und der Anzeigevorrichtung 12 der ersten und zweiten Ausführungsform im Detail betrachtet werden. Nicht im Detail erörterte Merkmale des Fahrzeugs 10 und der Anzeigevorrichtung 12 der zweiten Ausführungsform stimmen, soweit eine explizite Beschreibung erforderlich ist, im Zweifel mit denen der ersten Ausführungsform überein.

In diesem Ausführungsbeispiel umfasst die Anzeigevorrichtung 12 als Anzeigeelement 26 einen Combinerspiegel 42, der vorliegend in einem Innenraum 40 des Fahrzeugs 10 in einem Bereich unterhalb der Windschutzscheibe 28 positioniert ist. Der Combinerspiegel 42, der auch als Combiner 42 bezeichnet werden kann, ist mit einer Verstelleinrichtung 44 verstellbar, insbesondere verschwenkbar, an dem Armaturenbrett 24 gehalten. Der Combinerspiegel 42 kann mit der Verstelleinrichtung 44 einerseits in seiner Neigung eingestellt werden. Andererseits kann der Combinerspiegel 42 mit der Verstelleinrichtung 44 bei Nichtbenutzung in eine Lagerposition verschwenkt werden. Die Lagerposition ist in diesem Ausführungsbeispiel in dem Armaturenbrett 24 angeordnet.

Ferner umfasst die Optikeinrichtung 18 einen ersten Spiegel 20, über den von der Bilderzeugungseinrichtung 14 abgestrahltes Licht 16 unmittelbar auf den Combinerspiegel 42 reflektiert wird. Das Licht 16, das von der Bilderzeugungseinrichtung 14 abgestrahlt wird, wird also mit dem ersten Spiegel 20 auf den Combinerspiegel 42 projiziert. Ein zweiter Spiegel 22, der in der Optikeinrichtung 18 der ersten Ausführungsform vorgesehen ist, entfällt.

Der Combinerspiegel 42 umfasst eine semitransparente Spiegelfläche. Damit kann über den Combinerspiegel 42 in Übereinstimmung mit der ersten Ausführungsform eine virtuelle Anzeige 38 beziehungsweise ein virtuelles Bild 38 erzeugt werden, welche in einer Eyebox 30 von dem Fahrzeugführer 32 gesehen werden können.

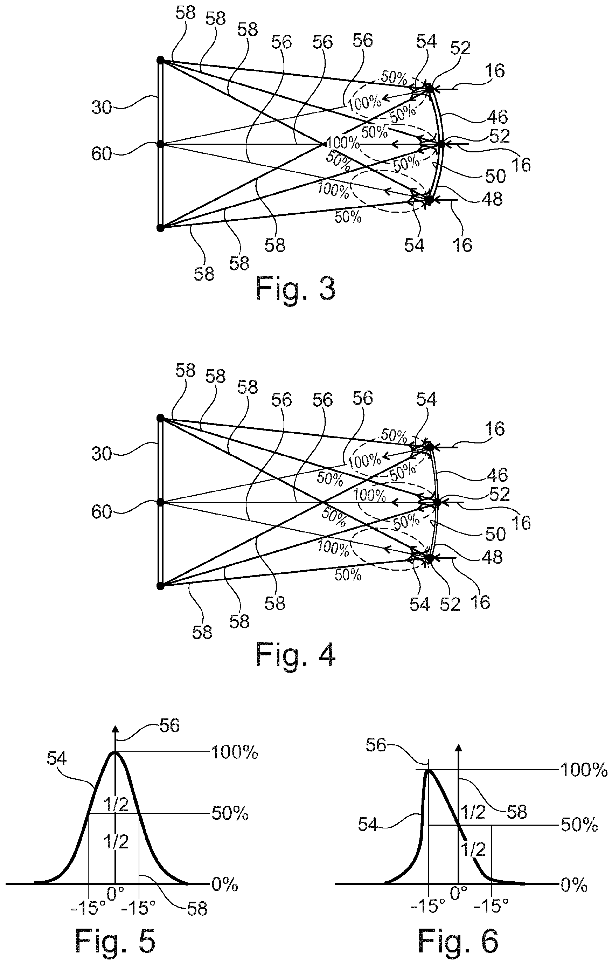

Fig. 3 zeigt eine Anordnung eines Diffusors 46 in einem Strahlengang des von der Bilderzeugungseinrichtung 14 abgestrahlten Lichts 16 gemäß Anspruch 1 der vorliegenden Erfindung. Der Diffusor 46 ist also in nicht explizit dargestellter Weise außerhalb der Bilderzeugungseinrichtung 14 positioniert. Alternativ kann der Diffusor 46 auch ausgehend von der Lichtquelle 62 an einer beliebigen Stelle im Strahlengang des von der Lichtquelle 62 abgestrahlten Lichts 16 innerhalb der Bilderzeugungseinrichtung 14 positioniert sein. Der Diffusor 46 kann also auf jeder Seiter der Displayeinheit 64 positioniert sein.

Die Anordnung und Ausgestaltung des Diffusors 46 gemäß der dritten Ausführungsform ist mit dem Fahrzeug 10 und der Anzeigevorrichtung 12 jeder der zuvor beschriebenen ersten oder zweiten Ausführungsform kombinierbar. Der Diffusor 46 kann innerhalb der Optikeinrichtung 16 in einem Strahlengang des von der Bilderzeugungseinrichtung 14 abgestrahlten Lichts 16 angeordnet sein. Ggf. kann der Diffusor 46 bereits als Teil der Bilderzeugungseinrichtung 14 ausgeführt sein.

Der Diffusor 46 ist aus einem transmissiven, elastisch verformbaren Kunststoffmaterial als im Wesentlichen ebene Platte mit einer im Wesentlichen konstanten Dicke gefertigt. Die ebene Platte ist insgesamt gebogen, so dass der fertige Diffusor 46 eine entsprechende Biegung aufweist.

Der Diffusor 46 weist eine Eintrittsfläche 48, über die von der Bilderzeugungseinrichtung 14 abgestrahltes Licht 16 in den Diffusor 46 eintritt, und eine Austrittsfläche 50 für eine Abstrahlung des eingestrahlten Lichts 16 auf, wobei ein Abstand zwischen der Eintrittsfläche 48 und der Austrittsfläche 50 im Wesentlichen konstant ist. Die Eintrittsfläche 48 und die Austrittsfläche 50 weisen durch die Biegung jeweils insgesamt eine im Wesentlichen einheitliche Wölbung auf. Die Wölbung des Diffusors 46 ist derart ausgeführt, dass die Eintrittsfläche 48 und die Austrittsfläche 50 ein Winkelsegment von etwa 20° umfassen. Entsprechend trifft das von der Bilderzeugungseinrichtung 14 abgestrahlte Licht 16 auch in einem Randbereich des Diffusors 46 mit einem Winkel von maximal 10° auf die Eintrittsfläche 48. Durch die Wölbung des Diffusors 46 und der damit einhergehenden Wölbung der Austrittsfläche 50 wird das von der Bilderzeugungseinrichtung 14 abgestrahlte Licht 16 von dem Diffusor 46 in der Eyebox 30 gebündelt.

Wie in Fig. 3 gezeigt, ist der Diffusor 46 an seiner Austrittsfläche 50 mit einer Mehrzahl optischer Strukturen 52 ausgeführt, die eine Abstrahlcharakteristik 54 zur Bündelung des abgestrahlten Lichts 16 aufweisen. Die optischen Strukturen 52 sind in dem Diffusor 46 an der Seite der Austrittsfläche 50 ausgeformt und weisen eine matrixartige Anordnung auf. Die Abstrahlcharakteristik 54 der optischen Strukturen 52 ist in Fig. 5 im Detail dargestellt. In diesem Ausführungsbeispiel weisen die optischen Strukturen 52 eine identische Abstrahlcharakteristik 54 mit einer Halbwertsbreite von etwa 30° auf. Die Halbwertsbreite einer Funktion mit einem Maximum ist dabei eine Differenz zwischen den beiden Argumentwerten, für die die Funktionswerte auf die Hälfte des Maximums abgesunken sind, anschaulich also die "Breite bei halber Höhe".

Wie entsprechend in Fig. 3 ersichtlich, weisen die optischen Strukturen 52 eine Hauptabstrahlrichtung 56 auf, die jeweils senkrecht zu der Austrittsfläche 50 ausgeführt ist. Zusätzlich sind in Fig. 3 die seitlichen Abstrahlrichtungen 58 für die Abstrahlung mit einer halben Intensität verglichen mit der Hauptabstrahlrichtung 56 angegeben.

Durch die optischen Strukturen 52 und Ihre Richtwirkung wird eine zusätzliche Richtwirkung des von der Bilderzeugungseinrichtung 14 abgestrahlten Lichts 16 zu der Eyebox 30 mit einer homogenen Lichtverteilung in der Eyebox 30 erzielt.

Fig. 4 zeigt eine Anordnung eines Diffusors 46 in einem Strahlengang des von der Bilderzeugungseinrichtung 14 abgestrahlten Lichts 16 gemäß einer vierten Ausführungsform. Die Anordnung und Ausgestaltung des Diffusors 46 gemäß der vierten Ausführungsform ist mit dem Fahrzeug 10 und der Anzeigevorrichtung 12 jeder der zuvor beschriebenen ersten oder zweiten Ausführungsform kombinierbar. Der Diffusor 46 kann innerhalb der Optikeinrichtung 16 in einem Strahlengang des von der Bilderzeugungseinrichtung 14 abgestrahlten Lichts 16 angeordnet sein. Ggf. kann der Diffusor 46 als Teil der Bilderzeugungseinrichtung 14 ausgeführt sein.

Der Diffusor 46 der vierten Ausführungsform ist aus einem transmissiven Kunststoffmaterial als gewölbte Scheibe ausgeführt mit einer im Wesentlichen konstanten Dicke ausgeführt. Die Biegung des Diffusors 46 der vierten Ausführungsform ist geringer als die Biegung des Diffusors 46 der dritten Ausführungsform.

Der Diffusor 46 weist eine Eintrittsfläche 48, über die von der Bilderzeugungseinrichtung 14 abgestrahltes Licht 16 in den Diffusor 46 eintritt, und eine Austrittsfläche 50 für eine Abstrahlung des eingestrahlten Lichts 16 auf, wobei ein Abstand zwischen der Eintrittsfläche 48 und der Austrittsfläche 50 im Wesentlichen konstant ist. Die Eintrittsfläche 48 und die Austrittsfläche 50 weisen durch die Biegung jeweils insgesamt eine im Wesentlichen einheitliche Wölbung auf. Die Wölbung des Diffusors 46 ist derart ausgeführt, dass die Eintrittsfläche 48 und die Austrittsfläche 50 ein Winkelsegment von weniger als 20° umfassen. Entsprechend trifft das von der Bilderzeugungseinrichtung 14 abgestrahlte Licht 16 auch in einem Randbereich des Diffusors 46 mit einem Winkel von weniger als 10° auf die Eintrittsfläche 48. Durch die Wölbung des Diffusors 46 und der damit einhergehenden Wölbung der Austrittsfläche 50 wird das von der Bilderzeugungseinrichtung 14 abgestrahlte Licht 16 von dem Diffusor 46 in der Eyebox 30 gebündelt.

Wie in Fig. 4 dargestellt ist, ist der Diffusor 46 an seiner Austrittsfläche 50 mit einer Mehrzahl optischer Strukturen 52 ausgeführt, die eine Abstrahlcharakteristik 54 zur Bündelung des abgestrahlten Lichts 16 aufweisen. Die optischen Strukturen 52 sind in dem Diffusor 46 an der Seite der Austrittsfläche 50 ausgeformt und weisen eine matrixartige Anordnung auf. Die optischen Strukturen 52 weisen jeweils eine Hauptabstrahlrichtung 56 auf, die in Richtung zu einem Mittelpunkt 60 der Eyebox 30 ausgeführt ist. Dadurch weisen die optischen Strukturen 52 unterschiedliche Winkel der Hauptabstrahlrichtung 56 bezogen auf eine Normale der Austrittsfläche 50 auf. So sind in einem Mittelbereich des Diffusors 46 optische Strukturen 52, die im Detail in Fig. 5 dargestellt sind, angeordnet. Diese optischen Strukturen 52 weisen in Übereinstimmung mit den optischen Strukturen 52 der dritten Ausführungsform eine Abstrahlcharakteristik 54 mit einer Halbwertsbreite von etwa 30° auf, wobei die Hauptabstrahlrichtung 56 senkrecht zu der Austrittsfläche 50 ausgeführt ist.

In einem Randbereich des Diffusors 46 sind optische Strukturen 52, deren Abstrahlcharakteristik 54 im Detail in Fig. 6 dargestellt ist, angeordnet. Diese optischen Strukturen 52 weisen eine Abstrahlcharakteristik 54 auf, wobei die Hauptabstrahlrichtung 56 nicht senkrecht zu der Austrittsfläche 50 ausgeführt ist, um insgesamt eine Abstrahlung in Richtung zu dem Mittelpunkt 60 der Eyebox 30 zu bewirken. Durch die optischen Strukturen 52 und Ihre Richtwirkung wird eine zusätzliche Richtwirkung des von der Bilderzeugungseinrichtung 14 abgestrahlten Lichts 16 zu der Eyebox 30 mit einer homogenen Lichtverteilung in der Eyebox 30 erzielt. Dabei ist es nicht erforderlich, das alle optischen Strukturen 52 exakt zu dem Mittelpunkt 60 der Eyebox 30 ausgerichtet sind. Das Licht 16 wird durch die Biegung der Abstrahlfläche 50 zusammen mit der Abstrahlcharakteristik 54 der optischen Strukturen 52 vergleichbar mit dem Diffusor 46 der dritten Ausführungsform in der Eyebox 30 gebündelt.

In einer alternativen Ausführungsform der Anzeigevorrichtung wird ausgehend von der Anzeigevorrichtung 12 der ersten bzw. zweiten Ausführungsform eine der Bilderzeugungseinrichtungen 14 der siebten oder achten Ausführungsform, die in den Figuren 8 oder 9 dargestellt sind, verwendet. Dabei beinhaltet die jeweilige Bilderzeugungseinrichtung 14 den Diffusor 46, wie untenstehend im Detail erläutert wird. Der Diffusor 46 kann dabei jeweils wie oben unter Bezug auf die Diffusoren 46 der dritten bis sechsten Ausführungsform beschrieben ausgeführt sein.

Die Bilderzeugungseinrichtung 14 der siebten Ausführungsform ist in Figur 8 dargestellt. Die Bilderzeugungseinrichtung 14 umfasst eine Lichtquelle 62 und eine Displayeinheit 64, wobei die Lichtquelle 62 auch hier als Hintergrundbeleuchtung für die Displayeinheit 64 ausgeführt. In diesem Ausführungsbeispiel ist die Lichtquelle 62 unmittelbar an der Displayeinheit 64 angebracht und somit quasi integral damit ausgeführt. Zusätzlich umfasst die Bilderzeugungseinrichtung 14 einen ersten Filter 66, der sich unmittelbar an die Displayeinheit 64 anschließt. Auch hier ist der erste Filter 66 optional und kann in einer alternativen Ausführungsform weggelassen werden. Außerdem umfasst die Bilderzeugungseinrichtung 14 den Diffusor 46, der im Strahlengang des Lichts 16 hinter dem ersten Filter 66 angeordnet ist. In Bezug auf mögliche Ausgestaltungen des Diffusors 46 gelten die obigen Ausführungen.

Die Bilderzeugungseinrichtung 14 der achten Ausführungsform ist in Figur 9 dargestellt. Die Bilderzeugungseinrichtung 14 der achten Ausführungsform ist im Wesentlichen identisch wie die Bilderzeugungseinrichtung 14 der ersten Ausführungsform ausgeführt, und umfasst zusätzlich einen Diffusor 46. Entsprechend umfasst die Bilderzeugungseinrichtung 14 der achten Ausführungsform umfasst eine Lichtquelle 62 und eine Displayeinheit 64, wobei die Lichtquelle 62 auch hier als Hintergrundbeleuchtung für die Displayeinheit 64 ausgeführt ist. Zusätzlich umfasst die Bilderzeugungseinrichtung 14 einen ersten und zweiten Filter 66, 68, die an beiden Seiten der Displayeinheit 64 positioniert sind. Die Filter 66, 68 sind optional und können in einer alternativen Ausführungsform weggelassen werden.

Außerdem umfasst die Bilderzeugungseinrichtung 14 den bereits genannten Diffusor 46, der im Strahlengang des Lichts 16 zwischen der Lichtquelle 62 und der Displayeinheit 64 angeordnet ist, konkret zwischen der Lichtquelle 62 und dem zweiten Filter 68. In Bezug auf mögliche Ausgestaltungen des Diffusors 46 gelten die obigen Ausführungen. In einer alternativen Ausführungsform ist der Diffusor 46 im Strahlengang des Lichts 16 hinter dem ersten Filter 66 angeordnet.

### Bezugszeichenliste

- 10: Fahrzeug
- 12: Anzeigevorrichtung
- 14: Bilderzeugungseinrichtung
- 16: Licht
- 18: Optikeinrichtung
- 20: erster Spiegel
- 22: zweiter Spiegel
- 24: Armaturenbrett
- 26: Anzeigeelement
- 28: Windschutzscheibe
- 30: Eyebox
- 32: Fahrzeugführer
- 34: Auge
- 36: Umgebungsbereich
- 38: virtuelle Anzeige, virtuelles Bild
- 40: Innenraum
- 42: Combinerspiegel, Combiner
- 44: Verstelleinrichtung
- 46: Diffusor
- 48: Eintrittsfläche
- 50: Austrittsfläche
- 52: optische Struktur
- 54: Abstrahlcharakteristik
- 56: Hauptabstrahlrichtung
- 58: seitliche Abstrahlrichtung
- 60: Mittelpunkt
- 62: Lichtquelle
- 64: Displayeinheit, TFT
- 66: erster Filter
- 68: zweiter Filter

## Patentansprüche

1. Anzeigevorrichtung (12) als Head-up Display für ein Fahrzeug (10) mit einer Bilderzeugungseinrichtung (14), die ausgeführt ist, Licht (16) zur Darstellung eines virtuellen Bildes (38) beziehungsweise einer virtuellen Anzeige (38) abzustrahlen, wobei die Bilderzeugungseinrichtung (14) eine Lichtquelle (62) und eine Displayeinheit (64) umfasst, und die Lichtquelle (62) das Licht (16) abstrahlt und die Displayeinheit (64) ein Bild bzw. eine Anzeige erzeugt,
einer Optikeinrichtung (18), die ausgeführt ist, das von der Bilderzeugungseinrichtung (14) abgestrahlte Licht (16) auf ein Anzeigeelement (26) zu projizieren, so dass das virtuelle Bild (38) bzw. die virtuelle Anzeige (38) in einer Eyebox (30) für einen Fahrzeugführer erzeugbar ist, wobei die Optikeinrichtung (18) dazu einen oder mehrere Spiegel (20, 22) umfasst, und
einem Diffusor (46) mit einer Eintrittsfläche (48) und einer Austrittsfläche (50), der in einem Strahlengang des von der Lichtquelle (62) abgestrahlten Lichts (16) angeordnet ist, so dass von der Lichtquelle (62) abgestrahltes Licht (16) über die Eintrittsfläche (48) in den Diffusor (46) eintritt und über die Austrittsfläche (50) aus dem Diffusor (46) austritt,
wobei die Austrittsfläche (50) insgesamt eine Wölbung aufweist, um das von der Lichtquelle (62) abgestrahlte Licht (16) in der Eyebox (30) der Anzeigevorrichtung (12) zu bündeln,
**dadurch gekennzeichnet, dass**
der Diffusor (46) an seiner Austrittsfläche (50) mit einer Mehrzahl optischer Strukturen (52) ausgeführt ist, wobei die optischen Strukturen (52) eine Abstrahlcharakteristik (54) zur Bündelung des abgestrahlten Lichts (16) aufweisen.

2. Anzeigevorrichtung (12) nach Anspruch 1, **dadurch gekennzeichnet, dass** der Diffusor (46) in der Bilderzeugungseinrichtung (14) angeordnet ist.

3. Anzeigevorrichtung (12) nach Anspruch 2, **dadurch gekennzeichnet, dass** der Diffusor (46) zwischen der Lichtquelle (62) und der Displayeinheit (64) angeordnet ist.

4. Anzeigevorrichtung (12) nach Anspruch 2, **dadurch gekennzeichnet, dass** der Diffusor (46) in einem Strahlengang des von der Lichtquelle (62) abgestrahlten Lichts (16) zwischen der Lichtquelle (62) und der Displayeinheit (64)ö angeordnet ist.

5. Anzeigevorrichtung (12) nach Anspruch 1, **dadurch gekennzeichnet, dass** der Diffusor (46) in einem Strahlengang des von der Lichtquelle (62) abgestrahlten Lichts (16) hinter der Bilderzeugungseinrichtung (14) angeordnet ist, so dass der Diffusor (46) Teil der Optikeinrichtung (18) ist.

6. Anzeigevorrichtung (12) nach einem der vorhergehenden Ansprüche 1 bis 5, **dadurch gekennzeichnet, dass**
die Wölbung des Diffusors (46) derart ausgeführt ist, dass die Austrittsfläche (50) ein Winkelsegment von maximal etwa 30°, vorzugsweise maximal etwa 20°, umfasst.

7. Anzeigevorrichtung (12) nach einem der vorhergehenden Ansprüche, **dadurch gekennzeichnet, dass**
der Diffusor (46) einen konstanten Abstand zwischen der Eintrittsfläche (48) und der Austrittsfläche (50) aufweist.

8. Anzeigevorrichtung (12) nach Anspruch 1, **dadurch gekennzeichnet, dass** die optischen Strukturen (52) eine Abstrahlcharakteristik (54) mit einer Halbwertsbreite von nicht mehr als 45°, vorzugsweise von nicht mehr als 35°, weiter bevorzugt von nicht mehr als 30°, aufweisen.

9. Anzeigevorrichtung (12) nach einem der vorhergehenden Ansprüche 1 oder 8, **dadurch gekennzeichnet, dass**
die optischen Strukturen (52) eine Hauptabstrahlrichtung (56) aufweisen, wobei die Hauptabstrahlrichtung (52) senkrecht zu der Austrittsfläche (50) ausgeführt ist.

10. Anzeigevorrichtung (12) nach einem der vorhergehenden Ansprüche 1 oder 8, **dadurch gekennzeichnet, dass**
die optischen Strukturen (52) eine Hauptabstrahlrichtung (56) aufweisen, wobei die Hauptabstrahlrichtung (56) der optischen Strukturen (52) in Richtung zu einem Mittelpunkt (60) der Eyebox (30) ausgeführt ist.

11. Anzeigevorrichtung (12) nach einem der vorhergehenden Ansprüche, **dadurch gekennzeichnet, dass**
der Diffusor (46) als ebene Platte ausgeführt ist, und die Wölbung in dem Diffusor (46) durch Biegen der ebenen Platte ausgebildet ist.

12. Anzeigevorrichtung (12) nach einem der vorhergehenden Ansprüche, **dadurch gekennzeichnet, dass**
die Anzeigevorrichtung (12) mit dem Anzeigeelement (26) ausgeführt ist.

13. Verfahren zur Herstellung einer Anzeigevorrichtung (12) als Head-up Display für ein Fahrzeug (10) umfassend die Schritte
Bereitstellen einer Bilderzeugungseinrichtung (14), die ausgeführt ist, Licht (16) mit einer Bildinformation abzustrahlen, wobei die Bilderzeugungseinrichtung (14) eine Lichtquelle (62) und eine Displayeinheit (64) umfasst, und die Lichtquelle (62) das Licht (16) abstrahlt und die Displayeinheit (64) ein Bild bzw. eine Anzeige erzeugt, Bereitstellen und Anordnen einer Optikeinrichtung (18), die ausgeführt ist, das von der Bilderzeugungseinrichtung (14) abgestrahlte Licht (16) auf ein Anzeigeelement (26) zu projizieren, so dass das Bild bzw. die Anzeige in einer Eyebox (30) für einen Fahrzeugführer erzeugt wird, wobei die Optikeinrichtung (18) dazu einen oder mehrere Spiegel (20, 22) umfasst,
Bereitstellen eines Diffusors (46) als ebene Platte, wobei der Diffusor (46) eine Eintrittsfläche (48) und eine Austrittsfläche (50) aufweist, und
Anordnen des Diffusors (46) in einem Strahlengang des von der Lichtquelle (62) abgestrahlten Lichts (16), so dass von der Lichtquelle (62) abgestrahltes Licht (16) über die Eintrittsfläche (48) in den Diffusor (46) eintritt und über die Austrittsfläche (50) aus dem Diffusor (46) austritt,
wobei das Verfahren ein Biegen des Diffusors (46) umfasst, so dass die Austrittsfläche (50) insgesamt eine Wölbung aufweist, um das von der Lichtquelle (62) abgestrahlte Licht (16) in der Eyebox (30) der Anzeigevorrichtung (12) zu bündeln,
**dadurch gekennzeichnet, dass**
der Diffusor (46) mit einer Mehrzahl optischer Strukturen (52) an seiner Austrittsfläche (50) bereitgestellt wird, wobei die optischen Strukturen (52) eine Abstrahlcharakteristik (54) zur Bündelung des abgestrahlten Lichts (16) aufweisen.

## Claims

1. Display apparatus (12) as a head-up display for a vehicle (10), having
an image generation device (14), which is embodied to emit light (16) to present a virtual image (38) or a virtual display (38), wherein the image generation device (14) comprises a light source (62) and a display unit (64), and the light source (62) emits the light (16) and the display unit (64) generates an image or a display, an optical device (18), which is embodied to project the light (16) emitted by the image generation device (14) onto a display element (26) in a manner such that the virtual image (38) or the virtual display (38) is generable in an eyebox (30) for a vehicle driver, wherein the optical device (18) comprises one or more mirrors (20, 22) for this purpose, and
a diffuser (46) having an entry surface (48) and an exit surface (50), which diffuser is arranged in a beam path of the light (16) emitted by the light source (62) in a manner such that light (16) emitted by the light source (62) enters the diffuser (46) via the entry surface (48) and exits the diffuser (46) via the exit surface (50), wherein the exit surface (50) as a whole has a curvature so as to focus the light (16) emitted by the light source (62) in the eyebox (30) of the display apparatus (12), **characterized in that**
the diffuser (46) is embodied on its exit surface (50) with a plurality of optical structures (52), wherein the optical structures (52) have a radiation pattern (54) for focusing the emitted light (16).

2. Display apparatus (12) according to Claim 1, **characterized in that** the diffuser (46) is arranged in the image generation device (14).

3. Display apparatus (12) according to Claim 2, **characterized in that**
the diffuser (46) is arranged between the light source (62) and the display unit (64).

4. Display apparatus (12) according to Claim 2, **characterized in that**
the diffuser (46) is arranged in a beam path of the light (16) emitted by the light source (62) between the light source (62) and the display unit (64).

5. Display apparatus (12) according to Claim 1, **characterized in that**
the diffuser (46) is arranged in a beam path of the light (16) emitted by the light source (62) downstream of the image generation device (14) in a manner such that the diffuser (46) is part of the optical device (18).

6. Display apparatus (12) according to any one of the preceding Claims 1 to 5, **characterized in that**
the curvature of the diffuser (46) is embodied such that the exit surface (50) comprises an angle segment of at most approximately 30°, preferably at most approximately 20°.

7. Display apparatus (12) according to any one of the preceding claims, **characterized in that**
the diffuser (46) has a constant distance between the entry surface (48) and the exit surface (50).

8. Display apparatus (12) according to Claim 1, **characterized in that**
the optical structures (52) have a radiation pattern (54) having a full width at half maximum of not more than 45°, preferably of not more than 35°, with further preference of not more than 30°.

9. Display apparatus (12) according to either one of the preceding Claims 1 and 8, **characterized in that**
the optical structures (52) have a main emission direction (56), wherein the main emission direction (52) is embodied perpendicular to the exit surface (50).

10. Display apparatus (12) according to either one of
the preceding Claims 1 and 8, **characterized in that** the optical structures (52) have a main emission direction (56), wherein the main emission direction (56) of the optical structures (52) is embodied in the direction towards a centre point (60) of the eyebox (30).

11. Display apparatus (12) according to any one of the preceding claims, **characterized in that**
the diffuser (46) is embodied as a flat plate, and the curvature in the diffuser (46) is formed by bending the flat plate.

12. Display apparatus (12) according to any one of the preceding claims, **characterized in that**
the display apparatus (12) is embodied with the display element (26).

13. Method for producing a display apparatus (12) as a head-up display for a vehicle (10), comprising the steps of
providing an image generation device (14), which is embodied to emit light (16) having a piece of image information, wherein the image generation device (14) comprises a light source (62) and a display unit (64), and the light source (62) emits the light (16) and the display unit (64) generates an image or a display, providing and arranging an optical device (18), which is embodied to project the light (16) emitted by the image generation device (14) onto a display element (26) in a manner such that the image or the display is generated in an eyebox (30) for a vehicle driver, wherein the optical device (18) comprises one or more mirrors (20, 22) for this purpose,
providing a diffuser (46) as a flat plate, wherein the diffuser (46) has an entry surface (48) and an exit surface (50), and
arranging the diffuser (46) in a beam path of the light (16) emitted by the light source (62) in a manner such that light (16) emitted by the light source (62) enters the diffuser (46) via the entry surface (48) and exits the diffuser (46) via the exit surface (50),
wherein the method comprises bending the diffuser (46) in a manner such that the exit surface (50) as a whole has a curvature in order to focus the light (16) emitted by the light source (62) in the eyebox (30) of the display apparatus (12),
**characterized in that**
the diffuser (46) is provided on its exit surface (50) with a plurality of optical structures (52), wherein the optical structures (52) have a radiation pattern (54) for focusing the emitted light (16).

## Revendications

1. Arrangement d'affichage (12) sous la forme d'un afficheur tête haute pour un véhicule (10), comprenant un dispositif de génération d'images (14) qui est conçu pour émettre de la lumière (16) en vue de représenter une image virtuelle (38) ou un indicateur virtuel (38), le dispositif de génération d'images (14) comportant une source de lumière (62) et une unité d'affichage (64), et la source de lumière (62) émettant la lumière (16) et l'unité d'affichage (64) générant une image ou un indicateur,
un dispositif optique (18), qui est conçu pour projeter la lumière (16) émise par le dispositif de génération d'images (14) sur un élément d'affichage (26), de sorte que l'image virtuelle (38) ou l'indicateur virtuel (38) puisse être généré dans une région oculaire (30) pour un conducteur de véhicule, le dispositif optique (18) comportant à cet effet un ou plusieurs miroirs (20, 22), et
un diffuseur (46) comprenant une surface d'entrée (48) et une surface de sortie (50), lequel est disposé dans un trajet de rayon de la lumière (16) émise par la source de lumière (62), de sorte que la lumière (16) émise par la source de lumière (62) pénètre dans le diffuseur (46) par le biais de la surface d'entrée (48) et sort du diffuseur (46) par le biais de la surface de sortie (50), la surface de sortie (50) présentant globalement une courbure afin de focaliser la lumière (16) émise par la source de lumière (62) dans la région oculaire (30) de l'arrangement d'affichage (12),
**caractérisé en ce que**
le diffuseur (46) est configuré à sa surface de sortie (50) avec une pluralité de structures optiques (52), les structures optiques (52) possédant une caractéristique de rayonnement (54) destinée à focaliser la lumière (16) émise.

2. Arrangement d'affichage (12) selon la revendication 1, **caractérisé en ce que** le diffuseur (46) est disposé dans le dispositif de génération d'images (14) .

3. Arrangement d'affichage (12) selon la revendication 2, **caractérisé en ce que** le diffuseur (46) est disposé entre la source de lumière (62) et l'unité d'affichage (64).

4. Arrangement d'affichage (12) selon la revendication 2, **caractérisé en ce que** le diffuseur (46) est disposé dans un trajet de rayon de la lumière (16) émise par la source de lumière (62) entre la source de lumière (62) et l'unité d'affichage (64).

5. Arrangement d'affichage (12) selon la revendication 1, **caractérisé en ce que** le diffuseur (46) est disposé dans un trajet de rayon de la lumière (16) émise par la source de lumière (62) derrière le dispositif de génération d'images (14), de sorte que le diffuseur (46) est une partie du dispositif optique (18).

6. Arrangement d'affichage (12) selon l'une des revendications 1 à 5, **caractérisé en ce que** la courbure du diffuseur (46) est conçue de telle sorte que la surface de sortie (50) comporte un segment d'angle ayant au maximum environ 30°, de préférence au maximum environ 20°.

7. Arrangement d'affichage (12) selon l'une des revendications précédentes, **caractérisé en ce que** le diffuseur (46) présente un écart constant entre la surface d'entrée (48) et la surface de sortie (50).

8. Arrangement d'affichage (12) selon l'une des revendications 1, **caractérisé en ce que** les structures optiques (52) présentent une caractéristique de rayonnement (54) ayant une largeur de valeur moyenne maximale de 45°, de préférence maximale de 35°, encore préférablement maximale de 30°.

9. Arrangement d'affichage (12) selon l'une des revendications précédentes 1 ou 8, **caractérisé en ce que** les structures optiques (52) présentent une direction de rayonnement principale (56), la direction de rayonnement principale (52) étant conçue perpendiculaire à la surface de sortie (50).

10. Arrangement d'affichage (12) selon l'une des revendications précédentes 1 ou 8, **caractérisé en ce que** les structures optiques (52) présentent une direction de rayonnement principale (56), la direction de rayonnement principale (56) des structures optiques (52) étant conçue en direction d'un point central (60) de la région oculaire (30).

11. Arrangement d'affichage (12) selon l'une des revendications précédentes, **caractérisé en ce que** le diffuseur (46) est réalisé sous la forme d'une plaque plane, et la courbure du diffuseur (46) est réalisée en cintrant la plaque plane.

12. Arrangement d'affichage (12) selon l'une des revendications précédentes, **caractérisé en ce que** l'arrangement d'affichage (12) est réalisé avec l'élément d'affichage (26).

13. Procédé de fabrication d'un arrangement d'affichage (12) sous la forme d'un afficheur tête haute pour un véhicule (10), comprenant les étapes suivantes fourniture d'un dispositif de génération d'images (14), lequel est conçu pour émettre de la lumière (16) avec une informations d'image, le dispositif de génération d'images (14) comportant un source de lumière (62) et une unité d'affichage (64), et la source de lumière (62) émettant la lumière (16) et l'unité d'affichage (64) générant une image ou un indicateur,
fourniture et arrangement d'un dispositif optique (18), lequel est conçu pour projeter la lumière (16) émise par le dispositif de génération d'images (14) sur un élément d'affichage (26), de sorte que l'image ou l'indicateur soit généré dans une région oculaire (30) pour un conducteur de véhicule, le dispositif optique (18) comportant à cet effet un ou plusieurs miroirs (20, 22), fourniture d'un diffuseur (46) sous la forme d'une plaque plane, le diffuseur (46) comprenant une surface d'entrée (48) et une surface de sortie (50), et
disposition du diffuseur (46) dans un trajet de rayon de la lumière (16) émise par la source de lumière (62), de sorte que la lumière (16) émise par la source de lumière (62) pénètre dans le diffuseur (46) par le biais de la surface d'entrée (48) et sort du diffuseur (46) par le biais de la surface de sortie (50),
le procédé comprenant un cintrage du diffuseur (46), de sorte que la surface de sortie (50) présente globalement une courbure afin de focaliser la lumière (16) émise par la source de lumière (62) dans la région oculaire (30) de l'arrangement d'affichage (12),
**caractérisé en ce que**
le diffuseur (46) est fourni avec une pluralité de structures optiques (52) au niveau de sa surface de sortie (50), les structures optiques (52) possédant une caractéristique de rayonnement (54) destinée à focaliser la lumière (16) émise.
